# EUROPEAN PATENT APPLICATION

(11) **EP 3 988 496 A1**
(43) Date of publication of application: **27.04.2022**
(21) Application number: 20863828.8
(22) Date of filing: 17.07.2020
(51) Int. Cl.: B66F 9/06, B66F 9/12, G05D 1/02

(54) **AUTOMATED GUIDED FORKLIFT**

(30) Priority: 10.09.2019 CN 201910855117
(71) Applicant: Lingdong Technology (Beijing) Co. Ltd, Beijing 100096 (CN)
(72) Inventor: HAN, Liang, Beijing 100096 (CN); XU, Guodong, Beijing 100096 (CN)
(74) Representative: Vossius & Partner Patentanwälte Rechtsanwälte mbB
(86) International application number: PCT/CN2020/102779
(87) International publication number: WO 2021/047288

(57) **Abstract**

This disclosure discloses an automated guided forklift. The automated guided forklift comprises a forklift device and an automated guiding device. The automated guiding device is arranged on the forklift device and comprises an imaging module and a processing unit, wherein the imaging module is used for capturing images of the surrounding environment of the forklift device, the processing unit is electrically connected to the forklift device and the imaging module, and the processing unit is used for performing the following steps: receiving command information, the command information including a target area, target goods, and a delivery destination; controlling the forklift device to enter the target area according to the command information; determining whether the image contains goods; if the image contains goods, the processing unit determining whether the goods are the target goods; and if the goods are the target goods, the processing unit controlling the forklift device to carry the goods to the delivery destination.

## Description

### TECHNICAL FIELD

This disclosure relates to an automated guided transport, in particular to an automated guided forklift.

### BACKGROUND ART

Forklifts are industrial vehicles used for goods loading, unloading and carrying, and are widely applied in the loading, unloading and carrying of goods in warehouses. In order to save labor costs and improve management efficiency, warehouse systems nowadays have been developing towards automation, which has led to the rise of automated guided forklifts. A control center of the warehouse system can designate an automated guided forklift, as well as an initial position and a target position of the goods to be carried (hereinafter referred to as "target goods"), so that the designated automated guided forklift moves automatically to the initial position without manual operation, and carries the target goods that have been placed in the initial position to the target position to complete the carrying task.

Due to the configuration of the known automated guided forklifts, however, the aforementioned initial position and target position can only be specified with precise positions, for example, the user may specify a fixed point on a warehouse map of the control center via a user interface, or manually enter the coordinates of the fixed point. Nevertheless, if the warehouse worker accidentally puts the target goods askew when placing the goods in place, or accidentally hits against the target goods, leaving the target goods out of the right position, it will be impossible for the automated guided forklift to find the target goods to complete the carrying task. If the target position can only be a fixed point, problems easily occur, such as failure to unload goods due to other goods that have been placed in the target position, or a number of automated guided forklifts have to wait in line to unload goods. In addition, since the initial position and the target position can only be fixed points, when the target goods are placed in different positions, the user has to manually designate the automated guided forklift, the initial position and the target position via the user interface repeatedly in order to complete the carrying of all the target goods, which is quite inconvenient for use.

### SUMMARY OF THE INVENTION

According to an embodiment of the disclosure, an automated guided forklift is provided, which comprises a forklift device and an automated guiding device. The automated guiding device is arranged on the forklift device. The automated guiding device comprises an imaging module and a processing unit. The imaging module is used for capturing images of the surrounding environment of the forklift device. The processing unit is electrically connected to the forklift device and the imaging module, and is used for performing the following steps: receiving command information, the command information including a target area, target goods and a delivery destination; controlling the forklift device to enter the target area according to the command information; determining whether the image contains goods; if the image contains goods, the processing unit determining whether the goods are the target goods; and if the goods are the target goods, the processing unit controlling the forklift device to carry the goods to the delivery destination.

Compared with the prior art, the target area of this disclosure is an area instead of a fixed point, which can avoid the failure of carrying tasks due to deviation of the target goods from the right position, and which is advantageous for the user to apply a single command to all the target goods within the target area, without the need to give commands one by one to the target goods placed in different positions within the target area. The delivery destination of the disclosure may also be an area instead of a fixed point, thereby avoiding situations where goods cannot be unloaded if the fixing point has been occupied by other goods, or a number of automated guided forklifts have to wait in line for unloading. Hence, the automated guided forklift of the disclosure is beneficial to improve the success rate of carrying tasks, the carrying efficiency, and also the convenience of use for users.

### BRIEF DESCRIPTION OF DRAWINGS

FIG. 1 is a perspective view of an automated guided forklift according to an embodiment of the disclosure.
FIG. 2 is a further perspective view of the automated guided forklift in FIG. 1.
FIG. 3 is an exploded view of the automated guided forklift in FIG. 2.
FIG. 4 is a functional block diagram of the automated guided forklift in FIG. 1.
FIG. 5 is an exploded view of a collision sensing module in FIG. 2.
FIG. 6 is a schematic view of the collision sensing module in FIG. 2 in one state.
FIG. 7 is a schematic view of the collision sensing module in FIG. 2 in another state.
FIG. 8 is a cross-sectional view of a prong and a wire protection structure in FIG. 2 taken along a cutting plane line A-A.
FIG. 9 is a flow chart of steps for automatic goods carrying performed by a processing unit.
FIG. 10 is a schematic view of a user interface according to an embodiment of the disclosure.

Reference signs are listed as follows:
20: automated guided forklift
100: forklift device
110: manual operating handle
120: goods holder module
120a: prong
130: drive module
131, 132, 133: wheel
140: forklift power supply module
200: automated guiding device
205: processing unit
210: device storage module
215: imaging module
220: first distance sensor
225: displayer
230: indicator light
235: emergency stop button
240: device power supply module
245: device communication module
250: forklift communication module
260: second distance sensor
270: collision sensing module
271: base plate
271a: groove
271b: wall face
271c: space
272: elastic sheet
272a, 272b: end
273: outer cover
274: movable sheet
274a: connecting end
274b: movable end
275: sensing element
280: bearing structure
281: carrier
282: mounting part
282a: first straight portion
282b: curved portion
282c: second straight portion
283: grip part
284: anti-collision part
285: wire protection structure
286: space
300: remote control center
310: management unit
320: user interface
330: central communication module
340: central storage module
510, 520, 530, 540, 550: step
600a: user interface
610a: map
611a: shelf pattern
612a: goods pattern
620a: input interface
630a: target area

### DETAILED DESCRIPTION OF EMBODIMENTS

The foregoing and further technical contents, features, and effects of the disclosure will be clearly presented in the following detailed description of the preferred embodiments in combination with exemplary drawings. It should be noted that the directional terms mentioned in the following embodiments, for example, up, down, left, right, front, back, etc., only refer to the directions of the exemplary drawings. Hence, the directional terms used herein are for the purpose of explaining, rather than limiting the disclosure. In addition, the same or similar elements will be represented by the same or similar reference signs throughout the following embodiments.

In this disclosure, electrical connection means that electrical energy or data, such as electrical signals, magnetic signals, and command signals, can be transmitted directly, indirectly, by wire or wirelessly between elements.

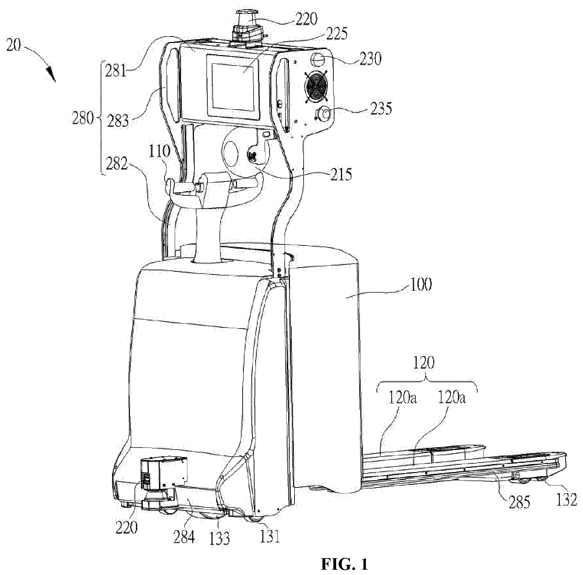

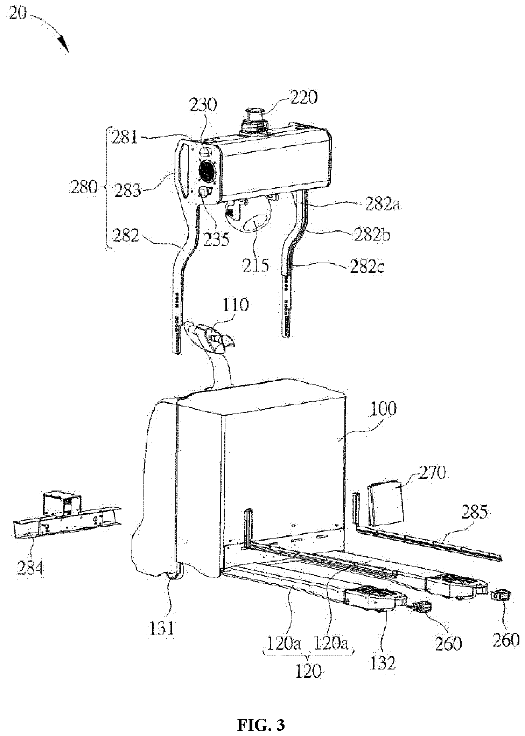

Now referring to FIG. 1 to FIG. 4, an automated guided forklift 20 comprises a forklift device 100 and an automated guiding device 200, and the automated guiding device 200 is arranged on the forklift device 100. The forklift device 100 comprises a manual operating handle 110, an goods holder module 120, a drive module 130 and a forklift power supply module 140. The manual operating handle 110 is used for manual operation of the forklift device 100 by a user. For example, the forklift device 100 may be moved by controlling the drive module 130 using the manual operating handle 110, or the goods holder module 120 may be lifted and lowered by controlling the goods holder module 120 using the manual operating handle 110. The goods holder module 120 is arranged at a rear side of the forklift device 100 and is provided with two prongs 120a, which can be operated to go up or down, to extend to a bottom of goods to load the goods, or to move away from the bottom of the goods to unload the goods. The drive module 130 may comprise a motor (not shown) and a plurality of wheels 131, 132 and 133, wherein the motor is arranged within the forklift device 100 and is electrically connected to one or more of the wheels 131, 132, 133 to drive the wheels. The forklift power supply module 140 is mainly used for supplying power required by the forklift device 100, for example, the forklift power supply module 140 may be electrically connected to the manual operating handle 110, the goods holder module 120, and the drive module 130 to supply power for the manual operating handle 110, the goods holder module 120, and the drive module 130. The forklift power supply module 140 may be a plug or a battery. The forklift device 100 may be a commercially available product, so further details about the forklift device 100 will not be elaborated herein.

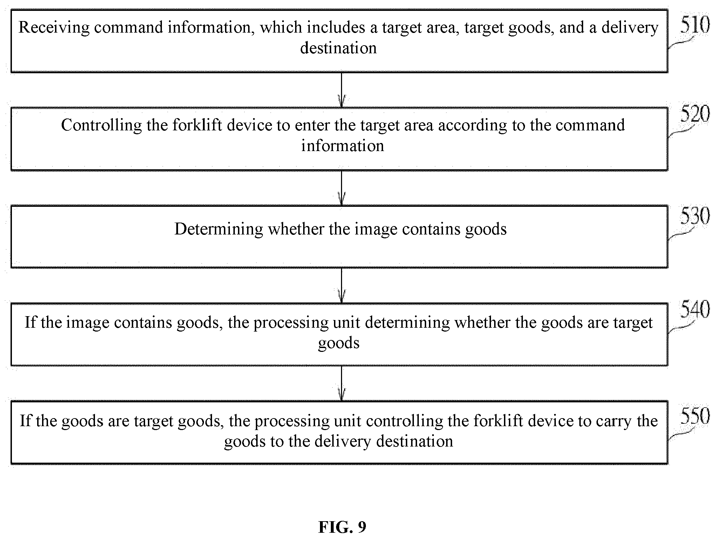

The automated guiding device 200 comprises an imaging module 215 and a processing unit 205, wherein the processing unit 205 is electrically connected to the forklift device 100 and the imaging module 215. The imaging module 215 is used for capturing images of the surrounding environment of the forklift device 100 in order to obtain environmental information of a workplace where the automated guided forklift 20 is located. The imaging module 215 may be a two-dimensional imaging module or a three-dimensional imaging module. The two-dimensional imaging module may be a camera, and the three-dimensional imaging module may be, but is not limited to, a combination of two cameras or a combination of a camera and a projector. In the case where the imaging module 215 is a two-dimensional imaging module, the automated guiding device 200 may preferably include a first distance sensor 220, which is electrically connected to the processing unit 205 and is used for sensing a distance between the forklift device 100 and a surrounding object. In the case where the imaging module 215 is a three-dimensional imaging module, the distance between the forklift device 100 and the surrounding object can be directly calculated from the image captured by the three-dimensional imaging module. The processing unit 205 has computing capabilities, and the processing unit 205 may be, but is not limited to, a central processing unit (CPU) or a graphics processing unit (GPU). The automated guiding device 200 may preferably include a forklift communication module 250, which electrically connects the processing unit 205 with the forklift device 100, whereby the processing unit 205 can control the forklift device 100 through the forklift communication module 250, for example, the forklift communication module 250 may be electrically connected to the goods holder module 120 and the drive module 130, and thus the processing unit 205 may control the lifting and lowering of the goods holder module 120 and the movement of the forklift device 100 by means of the forklift communication module 250, wherein the forklift communication module 250 may be, but is not limited to, a Bluetooth module. Through the abovementioned configuration, the automated guided forklift 20 can automatically move to the target area and carry the target goods in the target area to the delivery destination. For details, please refer to the relevant description of FIG. 9.

The automated guiding device 200 may preferably include a collision sensing module 270, which is arranged at the rear side of the forklift device 100 and is electrically connected to the processing unit 205. In this embodiment, the collision sensing module 270 is electrically connected through the forklift communication module 250 to the processing unit 205. When the collision sensing module 270 senses being pushed by goods, the automated guided forklift 20 stops moving in the direction of the goods. To be specific, when the processing unit 205 controls the goods holder module 120 to carry goods, it first controls the goods holder module 120 to extend under the goods, and then controls the forklift device 100 to move in the direction of the goods. When the collision sensing module 270 senses being pushed by the goods, which means the goods holder module 120 has sufficiently extended under the goods so as to be suitable to execute carrying, at this time the collision sensing module 270 transmits information to the processing unit 205, and the processing unit 205 controls the forklift device 100 to stop moving in the direction of the goods. The collision sensing module 270 allows for sensing whether the position of the goods on the goods holder module 120 is suitable for carrying, thereby avoiding the goods from falling during the carrying as a result of insufficient extension of the goods holder module 120 under the goods.

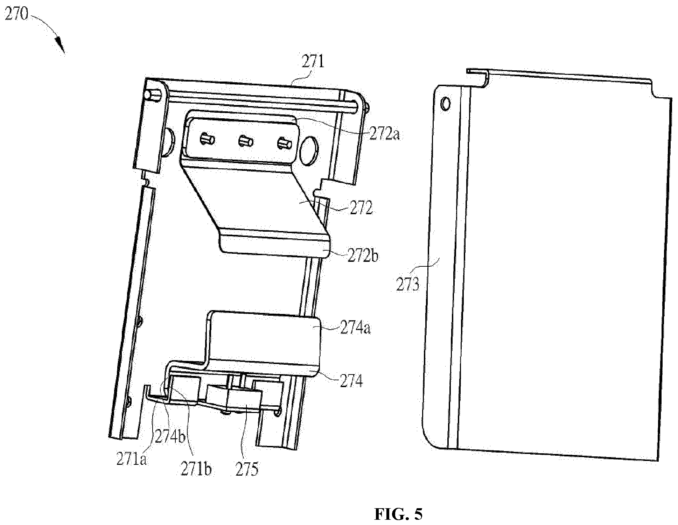

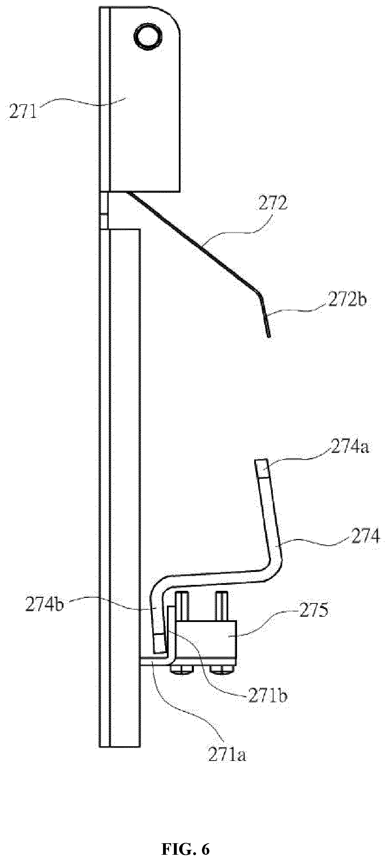

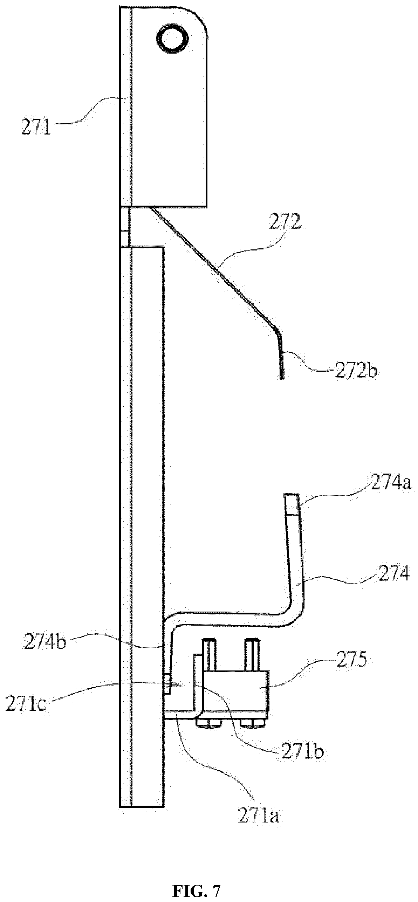

Now referring to FIG. 5, in this embodiment, the collision sensing module 270 comprises a base plate 271, an elastic sheet 272, an outer cover 273 and a movable sheet 274, wherein the base plate 271 includes a groove 271a, one end 272a of the elastic sheet 272 is fixed to the base plate 271, the outer cover 273 is pivotally connected to the base plate 271 and is pushed against by the other end 272b of the elastic sheet 272, the movable sheet 274 is arranged between the base plate 271 and the outer cover 273 in a movable manner relative to the base plate 271, and the movable sheet 274 comprises a connecting end 274a and a movable end 274b, wherein the connecting end 274a is connected to the outer cover 273, for example, by spot welding or screw locking, and the movable end 274b is movably arranged in the groove 271a. FIG. 6 and FIG. 7 will be referred to below, in which the outer cover 273 is omitted. As shown in FIG. 6, when the goods (not shown) do not push against the outer cover 273, the elastic sheet 272 pushes the outer cover 273 to a first position (not shown), so that the movable end 274b of the movable sheet 274 touches a wall face 271b of the groove 271a. As shown in FIG. 7, when the goods push against the outer cover 273 to a second position, a space 271c is formed between the movable end 274b of the movable sheet 274 and the wall face 271b of the groove 271a. By switching the outer cover 273 between the first position and the second position, a circuit (not shown) can be switched between ON and OFF, thereby providing information to be transmitted to the processing unit 205 in order to allow the processing unit 205 to sense whether the position of the goods on the goods holder module 120 is suitable for carrying. For example, the collision sensing module 270 may further include a sensing element 275, which is electrically connected to the processing unit 205. When the outer cover 273 is switched between the first position and the second position, the circuit connected with the sensing element 275 can be switched between ON and OFF to trigger the sensing element 275 to transmit the information to the processing unit 205.

Referring to FIG. 1 to FIG. 4, the automated guiding device 200 may preferably include a bearing structure 280, which comprises a carrier 281, a mounting part 282 and a grip part 283. The carrier 281 may be used for carrying other elements of the automated guiding device 200. In this embodiment, the imaging module 215 is arranged below the carrier 281, the processing unit 205 is arranged inside the carrier 281, and the mounting part 282 is connected to the carrier 281 and is detachably mounted to the forklift device 100, whereby the automated guiding device 200 is detachably installed on the forklift device 100, which is advantageous for the user to install the automated guiding device 200 on the existing forklift device 100 without the need to purchase the entire automated guided forklift 20, which greatly reduces the cost. Preferably, the mounting part 282 may comprise a first straight portion 282a, a curved portion 282b, and a second straight portion 282c, wherein the first straight portion 282a and the second straight portion 282c are connected through the curved portion 282b, and the curved portion 282b is arranged in a position corresponding to the manual operating handle 110 in such a manner that the mounting part 282 and the manual operating handle 110 do not interfere with each other and thus a freedom of operating the manual operating handle 110 is not affected. The grip part 283 protrudes outward from the carrier 281 so that the user can hold the grip part 283 when assembling or disassembling the bearing structure 280, which can greatly improve the convenience of operation.

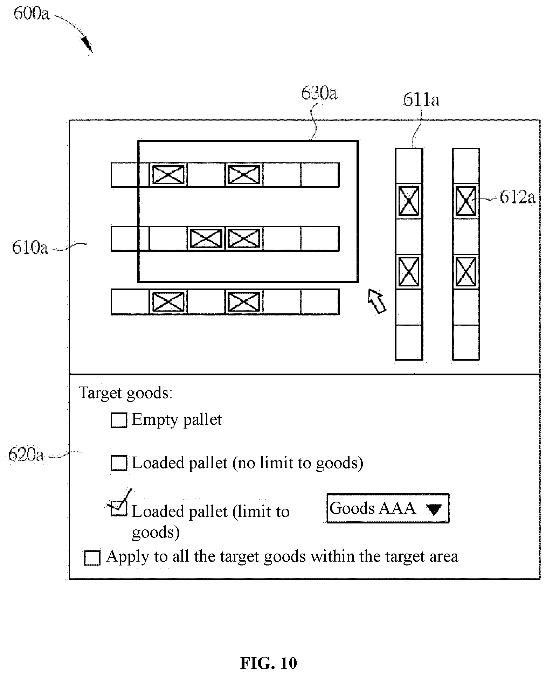

The automated guiding device 200 may preferably include a displayer 225, which is arranged on the carrier 281 and is electrically connected to the processing unit 205, and the displayer 225 may include a display interface or a user interface (reference can be made to the relevant description of FIG. 10). The display interface is used for displaying a current operating state of the automated guided forklift 20 so that users near the automated guided forklift 20 can know the current operating state of the automated guided forklift 20. The user interface may be used for providing information input by the user and transmitting it to the processing unit 205. In this way, the user can control the automated guided forklift 20 through the displayer 225.

The automated guiding device 200 may preferably include an indicator light 230, which is arranged on the carrier 281 and is electrically connected to the processing unit 205, and the indicator light 230 can emit light information, whereby users near the automated guided forklift 20 can know the current operating state of the automated guided forklift 20. For example, when the automated guided forklift 20 moves normally, the indicator light 230 may be in green; when the automated guided forklift 20 reaches the delivery destination, the indicator light 230 may be in blue; when the automated guided forklift 20 runs into an obstacle and is thus stopped temporarily, the indicator light 230 may be in red; and when the automated guided forklift 20 is switched to a manual mode, the indicator light 230 may blink in yellow.

The automated guiding device 200 may preferably include an emergency stop button 235, which is arranged on the carrier 281 and is electrically connected to the processing unit 205. When the user presses the emergency stop button 235, the processing unit 205 may control the automated guided forklift 20 to stop operating, for example, the processing unit 205 may control the drive module 130 to stop the forklift device 100 from moving, and control the goods holder module 120 to stop going up or down. In this way, the operation of the automated guided forklift 20 can be stopped immediately upon an emergency situation, thereby avoiding dangers.

The automated guiding device 200 may preferably include a device storage module 210, which is arranged inside the carrier 281 and is electrically connected to the processing unit 205, and the device storage module 210 may be used for storing data, including positioning information of the automated guided forklift 20, navigation information of the automated guided forklift 20, map information of the workplace of the automated guided forklift 20, target goods information, delivery destination information, etc. The device storage module 210 may be, but is not limited to, a read-only memory, a random access memory, or a combination thereof.

The automated guiding device 200 may preferably include an anti-collision part 284, which is arranged at a front side of the forklift device 100 and may be used for buffering impacts caused by collision of the forklift device 100 with other objects. The anti-collision part 284 may be made of materials with impact-resistant and high-strength characteristics, for example, it may be made of Fiberglass Reinforced Plastics (FRP).

The automated guiding device 200 may preferably include two first distance sensors 220, wherein one of the first distance sensors 220 is arranged above the carrier 281 and is electrically connected to the processing unit 205 for sensing a distance from the automated guided forklift 20 to a surrounding object, in particular to an object located in an upper position, and the other of the first distance sensors 220 is arranged on the anti-collision part 284 and is electrically connected to the processing unit 205. In this embodiment, the first distance sensor 220 arranged on the anti-collision part 284 is electrically connected to the processing unit 205 through the forklift communication module 250 and is used for sensing a distance from the automated guided forklift 20 to a surrounding object, in particular to an object located in front of the automated guided forklift 20 and in a lower position, whereby it is advantageous to the improvement in the obstacle-avoidance functionality of the automated guided forklift 20 at the front. The first distance sensors 220 may be, but are not limited to, LiDAR

The automated guiding device 200 may preferably include second distance sensors 260, which are arranged on the prongs 120a and are electrically connected to the processing unit 205 for sensing a distance between the automated guided forklift 20 and an object at the back.

In this embodiment, the second distance sensors 260 are electrically connected through the forklift communication module 250 to the processing unit 205. The number of the second distance sensors 260 is two and they are each arranged at an end of the two prongs 120a. In this way, it is advantageous to determination of the position of the bottom of the goods, allowing the prongs 120a to accurately be extended under the goods, and is advantageous for improving the obstacle-avoidance functionality of the automated guided forklift 20 at the back. The second distance sensors 260 may be, but are not limited to, photoelectric sensors.

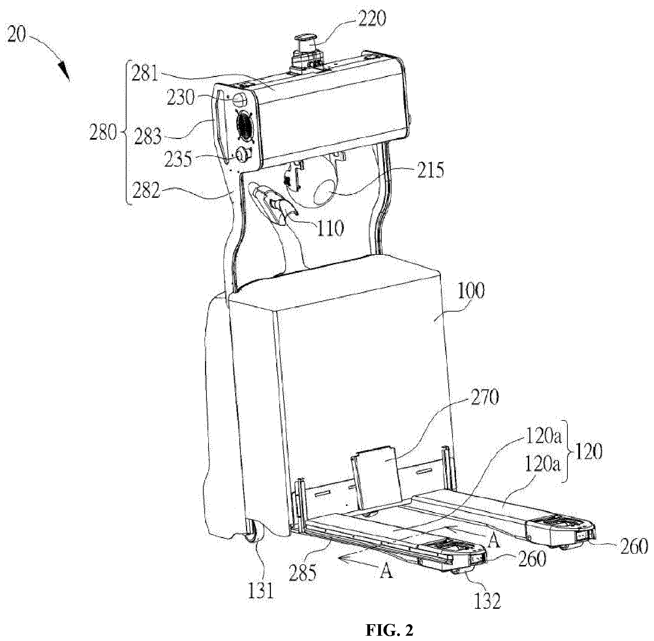

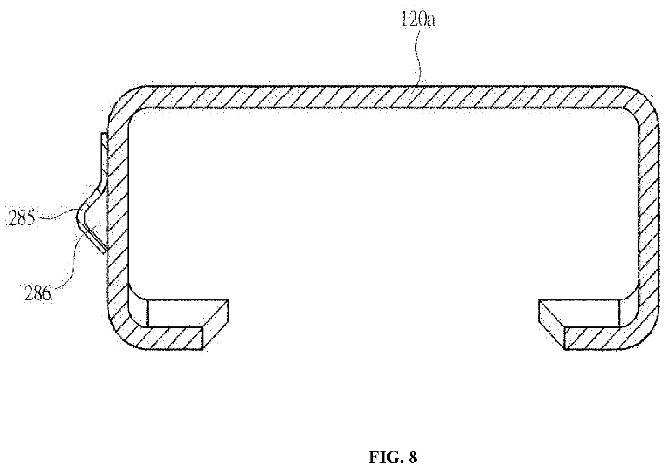

With reference to FIG. 2, FIG. 3 and FIG. 8, the automated guiding device 200 may preferably include a wire protection structure 285, which covers the prongs 120a, and a space 286 is formed between the wire protection structure 285 and the prongs 120a to accommodate wires (not shown). In this embodiment, the second distance sensors 260 are electrically connected to the forklift power supply module 140 through the wires so as to obtain electric power.

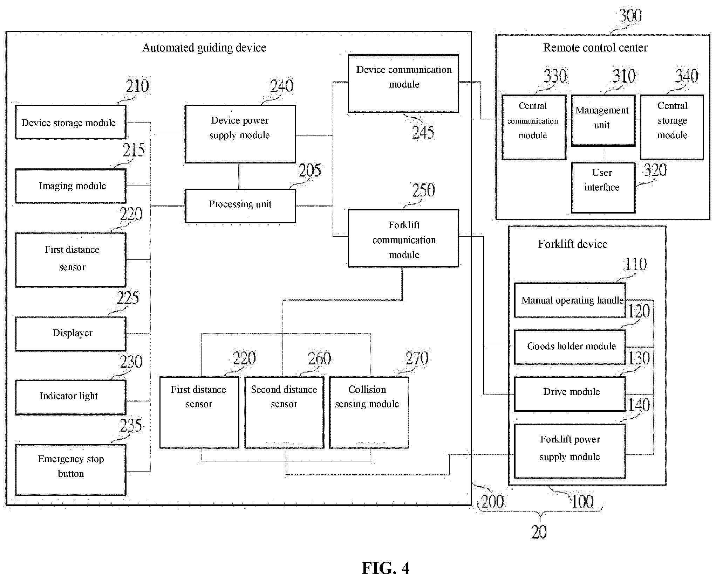

Referring to FIG. 4, the automated guiding device 200 may preferably include a device communication module 245, which is electrically connected to the processing unit 205 and a remote control center 300. The remote control center 300 may include a management unit 310 and a user interface 320, and may preferably include a central communication module 330 and a central storage module 340, wherein the management unit 310 is electrically connected to the user interface 320, the central communication module 330 and the central storage module 340, and the management unit 310 is electrically connected to the processing unit 205 through the central communication module 330 and the device communication module 245, and wherein the user interface 320 is electrically connected to the management unit 310, and the user interface 320 may be provided for the user to input information and for transmitting the information to the management unit 310 and then to the processing unit 205. In this way, the user can control the automated guided forklift 20 through the remote control center 300. The central storage module 340 may be used for storing data, such as map information, goods storage information, etc. of the workplace (e.g., a warehouse) of the automated guided forklift 20. The device communication module 245 and the central communication module 330 may be Wi-Fi wireless transmission modules, the remote control center 300 may be a server, the management unit 310 may be a warehouse management system (WMS), and the central storage module 340 may be a read-only memory, a random access memory, or a combination thereof. For the user interface 320, reference can be made to the relevant description of FIG. 10.

The automated guiding device 200 may preferably include a device power supply module 240, which is arranged inside the carrier 281, and the device power supply module 240 is mainly used for providing the power required by the automated guiding device 200. For example, the device power supply module 240 may be electrically connected to the processing unit 205, the device storage module 210, the first distance sensor 220 arranged on the carrier 281, the displayer 225, the indicator light 230, the emergency stop button 235, the forklift communication module 250 and the device communication module 245 in order to supply the power required by the aforementioned elements. The device power supply module 240 may be a plug or a battery. In this embodiment, other elements of the automated guiding device 200, such as the first distance sensor 220 arranged on an anti-collision bar 284, the second distance sensors 260, and the collision sensing module 270, are supplied with power by the forklift power supply module 140, since these elements are located farther to the carrier 281. However, the disclosure is not limited thereto. In other embodiments, it also is possible that the power required by all the elements of the automated guiding device 200 is supplied by the device power supply module 240, or it is also possible that the automated guided forklift 20 is provided with the device power supply module 240 only, without the forklift power supply module 140, in which case the device power supply module 240 provides the power required by all the elements in the automated guided forklift 20. Similarly, the automated guided forklift 20 may be provided with the forklift power supply module 140 only, without the device power supply module 240, in which case the forklift power supply module 140 provides the power required by all the elements in the automated guided forklift 20.

The above described configurations of the elements in the automated guiding device 200 are only examples, which can be flexibly adjusted according to actual needs, provided that the functions of the elements are not affected. For example, the imaging module 215 may also be arranged above the carrier 281, in which case the function of capturing images of the surrounding environment of the forklift device 100 can also be realized.

Reference now will be made to FIG. 9, which shows a flow chart of steps for automatic goods carrying performed by the processing unit 205. As shown in FIG. 9, the processing unit 205 is used for performing Step 510 to Step 550. Therefore, the subject for performing Step 510 to Step 550 is the processing unit 205.

Step 510 is to receive command information, which includes a target area, target goods, and a delivery destination. The command information may be sent out by the user through the remote control center 300 and then transmitted to the processing unit 205, or the command information may be input by the user through the displayer 225 and transmitted to the processing unit 205. Step 520 is to control the forklift device 100 to enter the target area according to the command information. Step 530 is to determine whether the image contains goods. Step 540 is, if the image contains goods, to determine by the processing unit 205 whether the goods are target goods. Step 550 is, if the goods are the target goods, to control the forklift device 100 by the processing unit 205 to carry the goods to the delivery destination. Step 510 to Step 550 will be described below in greater detail with reference to FIG. 10.

In FIG. 10, a user interface 600a may be an example of the user interface 320 of the remote control center 300, or an example of a user interface of the displayer 225. Here, the user interface 600a will be explained as the user interface 320 of the remote control center 300. The user interface 600a includes a map 610a and an input interface 620a, wherein the map 610a includes a shelf pattern 611a and a goods pattern 612a, and the map 610a may be a map of the workplace of the automated guided forklift 20. The workplace is exampled here as a warehouse, and all the goods in the warehouse are placed in pallets. The position of the shelf pattern 611a on the map 610a corresponds to a position of a shelf in the warehouse, and the position of the goods pattern 612a on the map 610a corresponds, in principle, to a position of goods in the warehouse. However, the goods may be not in the expected position as a result of a mistaken placing by the warehouse worker or a collision, which may cause inconsistency between the position of the goods pattern 612a on the map 610a and an actual position of the goods in the warehouse.

In FIG. 10, the user selects a target area 630a on the map 610a. Here, the user selects the target area 630a on the map 610a with a mouse. Upon selection of the target area 630a by the user, the management unit 310 records the coordinates of four vertices of the target area 630a and a thus defined area, and the user selects the target goods on the input interface 620a. The user here selects a pallet loaded with goods, and defines the goods as goods AAA, wherein AAA may be a serial number or product name of the goods. The user may further select a delivery destination (not shown) on the map 610a, and the delivery destination may be an area or a fixed point. If the delivery destination is an area, the way of selecting the delivery destination may be the same as that of the target area 630a; if the delivery destination is a fixed point, the user may use the mouse to directly click on a desired fixed point on the map 610a as the delivery destination. The management unit 310 records the coordinates of the four vertices of the delivery destination and a thus defined area, or the coordinates of the fixed point.

Next, the management unit 310 transmits the command information including information about the target area 630a, the target goods and the delivery destination to the processing unit 205. The processing unit 205 receives the command information (Step 510) and controls the forklift device 100 to enter the target area 630a according to the command information (Step 520). The processing unit 205 captures images by using the imaging module 215 while controlling the forklift device 100 to move in the target area 630a, and continuously determines in real time whether the images contain the goods. As all the goods in the warehouse are placed on pallets, the processing unit 205 may first determine whether there is a pallet in the image (Step 530), and if the processing unit 205 determines that there is a pallet in the image, the processing unit 205 may calculate a distance between the pallet and the forklift device 100 alone from the image or from the image in conjunction with the data collected by the first distance sensor 220, and control the forklift device 100 to move to the front of the pallet then to determine whether the pallet is the target goods (in this case, determining whether the pallet is loaded with the goods AAA, Step 540). If the processing unit 205 determines that the pallet is the target goods, the processing unit 205 controls the forklift device 100 to turn and to extend the goods holder module 120 to the bottom of the pallet, in which case the second distance sensors 260 can be used to improve the efficiency and accuracy of the goods holder module 120 extending to the bottom of the pallet, and the processing unit 205 continuously controls the forklift device 100 to keep moving in the direction of the pallet, where the collision sensing module 270 can be used to sense whether the position of the pallet on the goods holder module 120 is suitable for carrying. When the collision sensing module 270 senses being pushed by the pallet, the processing unit 205 controls the forklift device 100 to stop moving in the direction of the pallet, and controls the goods holder module 120 to go up to lift the pallet, and the processing unit 205 then controls the forklift device 100 to move to the delivery destination.

The aforementioned determining by the processing unit 205 of whether there is a pallet in the image or whether the goods are the target goods may be done by image comparison. For example, the command information may further include pallet image information, and the processing unit 205 may compare the image captured by the imaging module 215 with the pallet image information; or, the pallet image information may be pre-stored in the device storage module 210, and the processing unit 205 may directly retrieve the pallet image from the device storage module 210 and then compare the image captured by the imaging module 215 with the pallet image information.

For another example, the command information may include barcode information (e.g., a two-dimensional barcode) of the goods AAA, the pallets in the warehouse are provided with the barcode information of the goods stored therein, and the processing unit 205 may compare an image concerning the barcode information of the pallet captured by the imaging module 215 with the barcode information of the goods AAA. In other embodiments, if the processing unit 205 determines that the image contains the goods, the processing unit 205 will further determine whether the goods are in the target area 630a, thereby improving the accuracy of the processing unit 205 in performing carrying tasks.

Compared with the prior art, the target area of this disclosure is an area instead of a fixed point, which can avoid the failure of carrying tasks due to deviation of the target goods from the right position, and which is advantageous for the user to apply a single command to all the target goods within the target area, without the need to give commands one by one to the target goods placed in different positions within the target area. The delivery destination of the disclosure may also be an area instead of a fixed point, thereby avoiding situations where the goods cannot be unloaded as the fixing point has been occupied by other goods, or a number of automated guided forklifts have to wait in line for unloading. Hence, the automated guided forklift of the disclosure is beneficial to improving the success rate of carrying tasks, the carrying efficiency, and also the convenience of use for users.

The above descriptions are only preferred embodiments of the present disclosure, which do not intend to limit this disclosure. For the skilled in the art, the disclosure may have various modifications and changes. Any modification, equivalent substitution, improvement, etc. within the spirit and principles of the present disclosure should be included in the scope of protection of the disclosure.

## Claims

1. An automated guided forklift, **characterized in that** it comprises:
a forklift device; and
an automated guiding device, which is arranged on the forklift device, the automated guiding device comprising:
an imaging module for capturing images of the surrounding environment of the forklift device; and
a processing unit, which is electrically connected to the forklift device and the imaging module, and the processing unit is used for performing the following steps:
receiving command information, the command information including a target area, target goods, and a delivery destination;
controlling the forklift device to enter the target area according to the command information;
determining whether the image contains goods;
if the image contains the goods, the processing unit determining whether the goods are the target goods; and
if the goods are the target goods, the processing unit controlling the forklift device to carry the goods to the delivery destination.

2. The automated guided forklift according to claim 1, **characterized in that**, the automated guiding device further comprises a collision sensing module, which is arranged at a rear side of the forklift device and is electrically connected to the processing unit, the collision sensing module comprising:
a base plate, which includes a groove;
an elastic sheet, with one end thereof being fixed to the base plate;
an outer cover, which is pivotally connected to the base plate and is pushed against by the other end of the elastic sheet; and
a movable sheet, which is arranged between the base plate and the outer cover in a movable manner relative to the base plate, and which comprises a connecting end and a movable end, the connecting end being connected to the outer cover, and the movable end being movably arranged in the groove;
wherein when the goods do not push against the outer cover, the elastic sheet pushes the outer cover to a first position, so that the movable end of the movable sheet touches a wall face of the groove; and
wherein when the goods push against the outer cover to a second position, a space is formed between the movable end and the wall face of the groove.

3. The automated guided forklift according to claim 1, **characterized in that**, the automated guiding device further comprises a collision sensing module, which is arranged at a rear side of the forklift device and is electrically connected to the processing unit, and when the collision sensing module senses being pushed against by the goods, the automated guided forklift stops moving in the direction of the goods.

4. The automated guided forklift according to claim 1, **characterized in that**, the automated guiding device further comprises a bearing structure, which comprises:
a carrier, on which the imaging module and the processing unit are arranged;
a mounting part, which is connected to the carrier, and which is detachably mounted on the forklift device; and
a grip part, which protrudes outward from the carrier.

5. The automated guided forklift according to claim 1, **characterized in that**, the automated guiding device further comprises a bearing structure, which comprises:
a carrier, on which the imaging module and the processing unit are arranged; and
a mounting part, which is connected to the carrier, which is detachably mounted on the forklift device, and which comprises a first straight portion, a curved portion, and a second straight portion, wherein the first straight portion is connected to the second straight portion through the curved portion.

6. The automated guided forklift according to claim 5, **characterized in that**, the automated guiding device further comprises:
a displayer, which is arranged on the carrier and is electrically connected to the processing unit; and
an indicator light, which is arranged on the carrier and is electrically connected to the processing unit.

7. The automated guided forklift according to claim 5, **characterized in that**, the automated guiding device further comprises an emergency stop button, which is arranged on the carrier and is electrically connected to the processing unit.

8. The automated guided forklift according to claim 1, **characterized in that**, the automated guiding device further comprises:
an anti-collision part, which is arranged at a front side of the forklift device; and
a first distance sensor, which is arranged on the anti-collision part and is electrically connected to the processing unit.

9. The automated guided forklift according to claim 1, **characterized in that**, the forklift device comprises a prong, and the automated guiding device further comprises:
a second distance sensor, which is arranged on the prong and is electrically connected to the processing unit; and
a wire protection structure, which covers the prong, a space being formed between the wire protection structure and the prong to accommodate wires.

10. The automated guided forklift according to claim 1, **characterized in that**, the automated guiding device further comprises a device communication module, which is electrically connected to the processing unit and a remote control center, wherein the remote control center comprises a user interface that includes a map, on which an user selects the target area, and the remote control center sends out the command information and transmits it to the processing unit through the device communication module.
